Europäisches Patentamt

European Patent Office

Office européen des brevets

(11) Veröffentlichungsnummer : **0 174 692**
**B1**

(12) **EUROPÄISCHE PATENTSCHRIFT**

(45) Veröffentlichungstag der Patentschrift :
**23.11.89**

(21) Anmeldenummer : **85201403.4**

(22) Anmeldetag : **05.09.85**

(51) Int. Cl.⁴ : **A 01 B 49/02, A 01 B 17/00**

(54) **Bodenbearbeitungsmaschine.**

(30) Priorität : **10.09.84 NL 8402753**

(43) Veröffentlichungstag der Anmeldung :
**19.03.86 Patentblatt 86/12**

(45) Bekanntmachung des Hinweises auf die Patenterteilung : **23.11.89 Patentblatt 89/47**

(84) Benannte Vertragsstaaten :
**DE FR GB IT NL**

(56) Entgegenhaltungen :
**DE—A— 2 420 711**
**DE—A— 2 451 029**
**DE—B— 1 152 281**
**US—A— 1 682 224**
**US—A— 1 691 352**
**US—A— 1 697 679**
**US—A— 2 063 584**

(73) Patentinhaber : **C. van der Lely N.V.**
**Weverskade 10 P.O. Box 26**
**NL-3155 ZG Maasland (NL)**

(72) Erfinder : **Van der Lely, Cornelis**
**7 Brüschenrain**
**Zug (CH)**

(74) Vertreter : **Mulder, Herman et al**
**Octrooibureau Van der Lely N.V. Weverskade 10 P.O. Box 26**
**NL-3155 ZG Maasland (NL)**

**Beschreibung**

Die Erfindung betrifft eine Bodenbearbeitungsmaschine mit mindestens zwei Pflugkörpern, wobei jedem Pflugkörper mindestens ein angetriebenes Bodenbearbeitungswerkzeug zum Bearbeiten des von den Pflugkörpern seitlich versetzten Furchenbalkens zugeordnet ist.

Eine Bodenbearbeitungsmaschine dieser Art ist der amerikanischen Patentschrift 1 697 679 zu entnehmen. Bei diesen bekannten Maschinen erfolgt nicht immer eine ausreichende Vermischung der Erde mit Gewächsresten, wie z. B. Stroh und Stoppeln.

Der Erfindung liegt die Aufgabe zugrunde, eine Bodenbearbeitungsmaschine der gattungsgemässen Art so auszubilden, dass eine gleichmässige und innige Vermischung von Pflanzenresten und Erde in nur einem Arbeitsgang erfolgt. Diese Aufgabe wird bei einer Bodenbearbeitungsmaschine gemäss der Erfindung dadurch gelöst, dass ein Pflugkörper so ausgebildet und angeordnet ist, dass die Unterseite des Furchenbalkens nahe der Vorderseite tiefer als an der Hinterseite ausgeschnitten wird und das Bodenbearbeitungswerkzeug den Furchenbalken in entgegengesetzter Richtung seitlich versetzt.

Mit der erfindungsgemässen Maschine lassen sich die Furchenbalken leichter wenden und die einzelnen Schichten des Furchenbalkens sich besser vermischen, während nach der Bearbeitung keine Furchen zurückbleiben, was für die Saatbettbereitung besonders vorteilhaft ist.

Aus der amerikanischen Patentschrift 1 682 224 ist eine Bodenbearbeitungsmaschine bekannt, welche als Pflug ausgebildet ist und ein angetriebenes Bodenbearbeitungswerkzeug aufweist mittels welches der Furchenbalken bearbeitet werden kann. Das Werkzeug ist in entgegengesetzten Richtungen antreibbar.

Wie der Pflug ausgebildet ist und wie das Bodenbearbeitungswerkzeug den Furchenbalken bearbeitet ist der Patentschrift nicht zu entnehmen.

Die deutsche Offenlegungsschrift 2 451 029 zeigt einen Grubber, hinter dem eine Bodenbearbeitungsmaschine angeordnet ist, die eine Anzahl in einer quer zur Fahrtrichtung liegenden Reihe angeordnete angetriebene Bodenbearbeitungswerkzeuge aufweist.

Weitere Merkmale der Erfindung ergeben sich aus den Ansprüchen, der Beschreibungs und den Zeichnungen, die Ausführungsbeispiele der Erfindung zeigen und im folgenden näher beschrieben sind. Es zeigen :

Fig. 1 eine Draufsicht auf eine erfindungsgemässe Bodenbearbeitungsmaschine,

Fig. 2 einen Schnitt längs der Schnittlinie II-II in Fig. 1,

Fig. 3 einen Schnitt längs der Schnittlinie III-III in Fig. 2,

Fig. 4 in schematischer Darstellung, wie die von den Pflugkörpern aus dem Boden herausgeschnittenen Furchenbalken auf einen unbearbeiteten Bodenstreifen zwischen den Pflugkörpern abgelegt werden und anschliessend von den rotierenden Bearbeitungswerkzeugen erfasst werden,

Fig. 5 eine Draufsicht auf ein zweites Ausführungsbeispiel einer erfindungsgemässen Bodenbearbeitungsmaschine,

Fig. 6 eine Seitenansicht der in Fig. 5 dargestellten Bodenbearbeitungsmaschine,

Fig. 7 in schematischer Darstellung einen Bodenquerschnitt längs der Schnittlinie VII-VII in Fig. 5, wobei pflanzliches Material zwischen den Furchenbalken und dem unbearbeiteten Boden eingepflügt ist,

Fig. 8 in schematischer Darstellung einen Bodenquerschnitt längs der Schnittlinie VIII-VIII in Fig. 5, also nach der Bearbeitung mit der erfindungsgemässen Maschine ; pflanzliches Material und Erde sind hier im Gegensatz zu Fig. 7 gleichmässig verteilt.

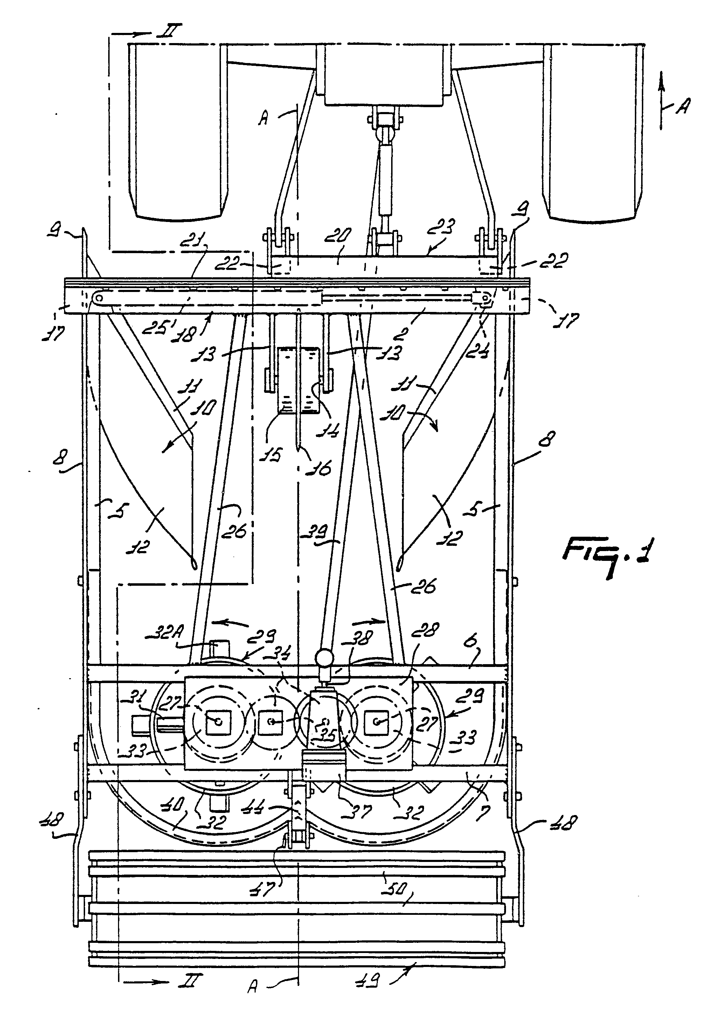

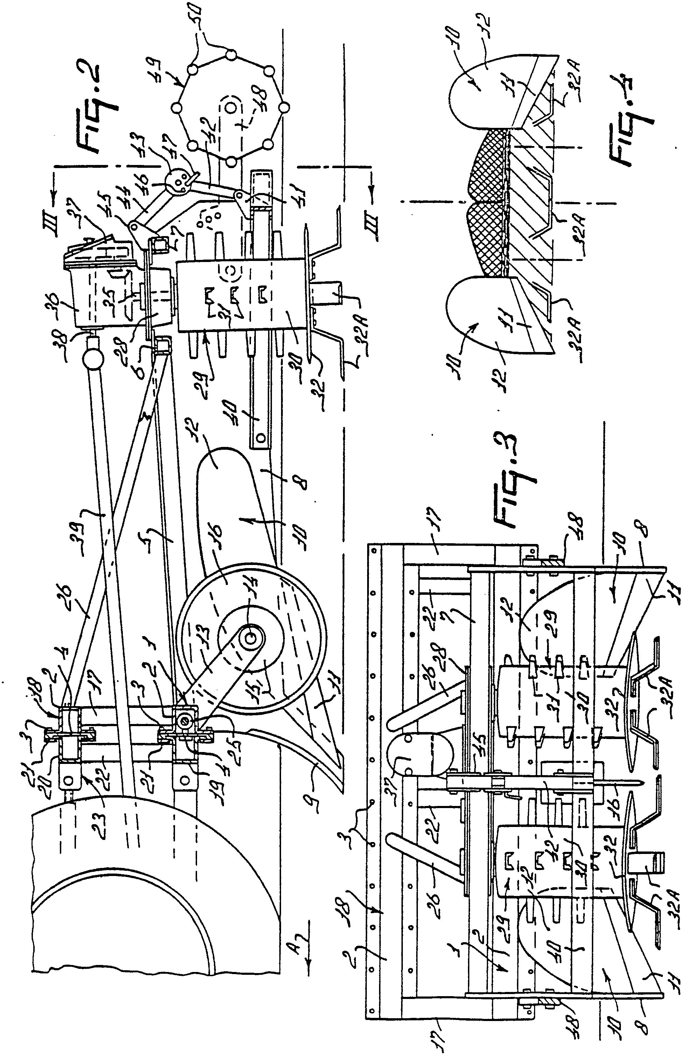

Die anhand der Figuren 1 bis 3 dargestellte Bodenbearbeitungsmaschine hat einen an der Vorderseite der Maschine, etwa horizontal und quer zur normalen Fahrt- und Arbeitsrichtung A angeordneten Tragbalken 1. Der Tragbalken 1 hat einen aus Blech geformten im Querschnitt Uförmigen Teil 2 dessen Schenkel nach vorne gerichtet sind (siehe Fig. 2). Die Schenkelenden sind rechtwinklig nach oben bzw. unten abgebogen und mit Schrauben 3 an einer etwa vertikal angeordneten Platte 4 befestigt. Nahe den Enden des Tragbalkens 1 sind an seiner Rückseite zwei Längsbalken 5 befestigt, die in Fahrt- und Arbeitsrichtung A der Maschine angeordnet sind und etwa die Länge des Tragbalkens 1 aufweisen.

Die Balken 5 sind vom Tragbalken 1 an leicht nach oben gerichtet (Fig. 2) und an ihrem Rückseiten mit einem horizontal angeordneten Querbalken 6 verbunden. Der Querbalken 6 ist als Hohlbalken mit eckigem, vorzugsweise viereckigem Querschnitt ausgebildet und so angeordnet, dass Vorder- und Rückseite etwa vertikal sind. In einigem Abstand hinter dem Querbalken 6 ist parallel dazu ein zweiter, gleich ausgebildeter Querbalken 7 angeordnet. Der Querbalken 7 ist durch Seitenplatten 8 mit den Balken 1, 5 und 6 verbunden. Die Seitenplatten 8 sind aufwärts, vorzugsweise vertikal gerichtet und liegen in Fahrt- und Arbeitsrichtung A. An den Vorderseiten der Platten 8 ist jeweils ein nach unten gerichteter Teil 9 vorgesehen, der an seiner Rückseite einen schräg nach vorn und unten geradlinig verlaufenden Teil aufweist, der in einen etwa horizontal liegenden kurzen Teil übergeht. Dieser horizontale, kurze Teil geht an seiner Vorderseite in einen gleichmässig gekrümmten nach hinten und oben verlaufenden Teil über, der nahe der Unterseite des Tragbalkens 1 etwa vertikal gerichtet und mit einem als Schneide ausgebildeten Rand versehen ist (Fig. 2). Am Teil 9 jeder Platte 8 ist ein Pflugkörper 10 angebracht, der sich von der Platte 8 in Richtung auf die Längssymmetrieebene A-A der Maschine erstreckt, die durch die Mitte der Balken 1, 6 und 7 verläuft und etwa parallel zur Arbeits- und Fahrtrichtung A der Maschine ist. Die Pflugkörper 10 sind in bezug auf die Längssymetrieebene A-A spiegelsymmetrisch ausgebildet und angeordnet. Jeder Pflugkörper 10 hat ein Schar 11, das sich von der Unterseite des Teiles 9 schräg in Richtung auf die Längssymmetrieebene A-A erstreckt, wobei die Vorderseite des Schars 11 mit der Fahrt- und Arbeitsrichtung A der Maschine in Draufsicht (Fig. 1) einen Winkel von etwa 30° einschliesst. In Seitenansicht (Fig. 2) gesehen, verläuft das Schar 11 von seiner Befestigungsstelle ab schräg nach oben und schliesst dabei einen Winkel von etwa 15° mit der Horizontalen ein. Das Schar 11 ist an der Unterseite eines Streichbrettes 12 angeordnet. Wie aus Fig. 1 ersichtlich ist, sind die beiden Pflugkörper 10 in einem Abstand voneinander angeordnet, der etwa der doppelten Arbeitsbreite eines Pflugkörpers entspricht. Etwa auf halber Länge sind an der Rückseite des Tragbalkens 1 zwei nach hinten und unten gerichtete Tragarme 13 befestigt, die jeweils aus einem Streifen Flachmaterial bestehen (Fig. 2). Die Tragarme 13 sind nahe ihren unteren Enden durch einer Achse 14 verbunden, die etwa quer zur Fahrt- und Arbeitsrichtung A und horizontal angeordnet ist. Die Achse 14 trägt ein Stützrad 15, auf dem mittig eine Scheibe 16 sitzt, die in der Längssymmetrieebene A-A der Maschine liegt.

Nahe seinen Enden ist an der Oberseite des Tragbalkens 1 jeweils ein aufwärts gerichteter Träger 17 angebracht. Die Träger 17 sind an ihren Oberseiten durch einen Tragbalken 18 verbunden, der in seiner Ausbildung dem Tragbalken 1 entspricht.

An ihrer Vorderseite sind die Tragbalken 1 und 18 jeweils mit einem Querbalken 19 bzw. 20 versehen. Die Querbalken 19 und 20 sind wie die Tragbalken 1 und 18 ebenfalls aus Flachmaterial geformt und haben U-förmigen Querschnitt, wobei die Schenkel nach hinten gerichtet und rechtwinklig nach oben bzw. unten abgebogen sind. Die nach oben bzw. unten abgebogenen Schenkelenden der Querbalken 18, 19 sind zwischen den Führungsleisten 21 und der zugehörigen vertikalen Platte 4 angebracht. Wie in Fig. 2 dargestellt, sind die Führungsleisten 21 jeweils nahe der Unter- bzw. Oberseite einer vertikalen Platte 4 mit Schrauben 3 an dieser befestigt. Durch die mit den Platten 4 verbundenen Führungsleisten 21 werden Führungen gebildet, in denen die Querbalken 19 und 20 quer zur Fahrt- und Arbeitsrichtung A verschiebbar sind. Die Querbalken 19 und 20 sind nahe ihren Enden durch aufwärts gerichtete Streben 22 mit einander verbunden und bilden einen Teil eines Anbaubockes 23 mit Dreipunktanschluss. Nahe dem in Fahrtrichtung A gesehen rechten Ende des Quersbalkens 19 ist eine nach hinten gerichtete Zunge 24 befestigt, die durch einen Schlitz längs der unteren Platte 4 in den Tragbalken 1 ragt (Fig. 1). An der Zunge 24 ist das eine Ende eines hydraulischen Hubzylinders 25 angelenkt, dessen anderes Ende am linken Träger 17 gelenkbefestigt ist, so dass der Hubzylinder 25 innerhalb des Tragbalkens 1 angeordnet ist. Mit Hilfe des Hubzylinders 25 kann der Anbaubock 23 in bezug auf die Maschine quer zur Fahrtrichtung A verstellt werden. Hierdurch kann die Maschine im Betrieb in bezug auf den Schlepper nach rechts oder links bewegt werden. Symmetrisch zur Längssymmetrieebene A-A sind zwischen dem Querbalken 6 und der Rückseite des Tragbalkens 18 zwei nach vorne konvergierende Balken 26 angebracht. Zwischen den parallel zueinander angeordneten Querbalken 6 und 7 sind im gleichen Abstand von der Längssymmetrieebene A-A aufwärts gerichtete, vorzugsweise leicht nach vorn geneigte Wellen 27 angeordnet, die in einem zwischen den Querbalken 6, 7 liegenden Kastenbalken 28 gelagert sind. Jede der Wellen 27 trägt einen Werkzeugkreisel 29, der einen unter dem Kastenbalken 28 angeordneten zylindrischen Teil 30 aufweist. Dieser zylindrische Teil 30 ist koaxial zur Drehachse der Welle 27 angeordnet und an seinem Aussenumfang mit radial nach aussen weisenden Werkzeugen in Form von Zinken 31 versehen. Die Zinken 31 sind in Gruppen angeordnet, wobei die einzelnen Zinkengruppen in einem Winkelabstand von etwa 90° zu einander auf dem zylindrischen Teil angeordnet sind. Wie aus Fig. 2 ersichtlich ist, sind die Zinken einer Zinkengruppe im bezug auf die benachbarten Zinkengruppen höhenversetzt; die Zinken 31 der beiden Dreier-Zinkengruppen sind höhenmässig etwa zwischen den Zinken 31 der Vierer-Zinkengruppen angeordnet. Die Zinken 31 bestehen aus U-Profilen mit nach unten weisenden Schenkeln, die zum freien Ende des Werkzeuges hin schmaler werden. Der zylindrische Teil 30, der wie hier vorzugsweise einen Durchmesser von etwa 30 cm aufweist, ist an seiner Unterseite mit einer Scheibe 32 versehen, die mindestens den Durchmesser der von den Enden der Zinken 31 beschriebenen Bahnen hat. Unter der Scheibe 32 sind im Winkelabstand von 90° vier Auflockerungswerkzeuge 32A zur Auflockerung des Untergrunds befestigt. Die Auflockerungswerkzeuge 32A sind messerförmig und weisen einen etwa senkrecht zur Drehachse des Werkzeugkreisels 29 gerichteten Teil auf, der über einen schräg nach oben, in Richtung auf die Drehachse verlaufenden Teil in einen Befestigungsteil übergeht, mit dem das Werkzeug 32A an der Unterseite der Scheibe 32 befestigt ist. Wie aus Fig. 1 ersichtlich ist, überlappen sich die Bahnen der Auflockerungswerkzeuge 32A. Auf jeder Welle 27 sitzt innerhalb des Kastenbalkens 28 ein Stirnrad 33, das mit einem Stirnrad 34 gleicher Grösse in Antriebsverbindung steht. Die Stirnräder 34 sitzen auf Wellen 35, die parallel zu den Wellen 27 angeordnet sind und stehen miteinander im Eingriff. Eine der Wellen 35 wird von einem darüber angeordneten Kegelradwinkelgetriebe 36 angetrieben, dessen Antriebswelle in Fahrt- und Arbeitsrichtung A liegt und in ein hinter dem Getriebe 36 angeordnetes Wechselgetriebe 37 geführt ist. Die ebenfalls in Fahrtrichtung A liegende Hauptantriebswelle 38 des Wechselgetriebes 37 ist durch das Kegelradwinkelgetriebe 36 hindurch und an dessen Vorderseite herausgeführt. Dieses vordere Wellenende (38) wird im Betrieb über eine Kreuzgelenkwelle 39 mit der Zapfwelle des Schleppers verbunden, wie in Fig. 1 dargestellt ist.

Jeder Werkzeugkreisel 29 ist rückseitig von einer Streichschiene 40 umgeben, die von einem U-Profil gebildet ist, dessen Schenkel dem Werkzeugkreisel 29 zugewandt sind (Fig. 2). Jede der Streichschienen 40 verläuft von seiner vor dem Werkzeugkreisel 29 liegenden Gelenkbefestigung an der Unterseite der benachbarten Seitenplatte 8 ab, zunächst etwa parallel zu der Platte 8 nach hinten und geht in Höhe der Wellen 27 in einen teilkreisförmigen Teil über, der in bezug auf die Drehachse des gegenüberliegenden Werkzeugkreisels 29 konzentrisch liegt (Fig. 1). Die kreisbogenförmig ausgebildeten Teile der Streichschienen 40 sind in Höhe der Längssymetrieebene (A-A) der Maschine miteinander verbunden, wobei eine nach vorn gerichtete Spitze entsteht (Fig. 1). An dieser Spitze sind Zungen 41 angebracht, die sich nach oben und leicht nach hinten erstrecken. Zwischen den Zungen 41 ist ein nach oben gerichteter Hebel 42 gelenkig angebracht, dessen oberes Ende zwischen Scheiben 43 gelenkig befestigt ist. Die Scheiben 43 sind fest an dem unteren Ende eines aufwärts gerichteten Hebels 44 befestigt, der zwischen Zungen 45 angelenkt ist, die nahe der Mitte an der Rückseite des Querbalkens 7 befestigt sind.

Die Scheiben 43 weisen Bohrungen 46 auf, in die ein Verriegelungsstift 47 führbar ist, der die Scheiben 43 mit dem oberen Ende des Hebels 42 gelenkig verbindet. Auf diese Weise sind die beiden Streichschienen 40 höhenverstellbar und an die Arbeitstiefe der Werkzeugkreisel 29 anpassbar (siehe Fig. 2). In Seitenansicht (Fig. 2) kurz hinter den Drehachsen der Wellen 27 ist an jeder Seitenplatte 8 ein nach hinten gerichteter Arm 48 gelenkig befestigt. Zwischen den hinteren Enden der Arme 48 ist eine Nachlaufwalze 49 frei drehbar gelagert. Die Walze 49 ist als Stabwalze ausgebildet und über ihren Umfang mit Stäben 50 versehen, die parallel zur Drehachse der Walze 48 angeordnet sind. Die Arme 48 sind in bezug auf die Seitenplatten 8 höhenverstellbar und in mehreren Stellungen verriegelbar.

Im Betrieb ist die Maschine über den Dreipunktanschluss des Anbaubockes 23 mit der Dreipunkt-Hebevorrichtung des Schleppers verbunden und wird vom Schlepper in Fahrt- und Arbeitsrichtung A gezogen. Hierbei bewegen sich die in bezug auf die Längssymetrieebene A-A spiegelbildlich angeordneten Pflugkörper 10 in einer durch die Stellung des Stützrades 15 bestimmten Tiefe (vorzugsweise 25 bis 30 cm) durch die Erde. Durch Höhenverstellung der Walze kann die Neigung der Maschine nach vorn vergrössert oder verkleinert werden. Auch das Stützrad 15 kann höhenverstellbar ausgebildet sein, so dass die Arbeitstiefe ebenfalls veränderbar ist. Die erfindungsgemässe Maschine eignet sich vorzugsweise zum Bearbeiten abgeernteter Felder.

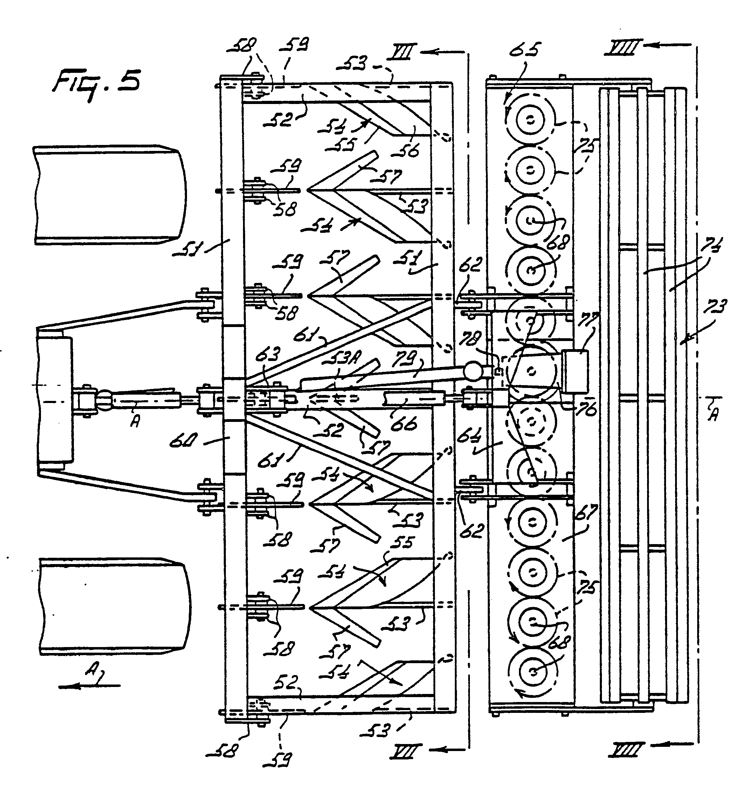

Im Betrieb trennen die stetig gekrümmten Schneidränder der nach unten gerichteten Teile 9 der Seitenplatten 8 und die Scheibe 16 des Stützrades 15 zwei benachbarte Erdstreifen vertikal ab. Jeder Streifen hat etwa die doppelte Arbeitsbreite eines Pflugkörpers 10. Die Pflugkörper 10 schneiden die äusseren Hälften der Erdstreifen mit den Scharen 11 los. Der so entstehende Furchenbalken weist eine von aussen nach innen (in Richtung auf die Längssymmetrieebene A-A gesehen) abnehmende Dicke auf, die in Richtung der Scharinnenseite auf wenige Zentimeter abnimmt, da das Schar 11, von seiner Befestigung an der Unterseite schräg nach oben und innen verläuft. Der von dem Schar 11 losgeschnittene Furchenbalken kann hierdurch vom Streichbrett 12 leichter gewendet und nach innen verschoben werden, wobei der Furchenbalken umgekehrt auf den unbearbeiteten Teil des Erdstreifens abgelegt wird (Fig. 4). Hierbei geraten auf dem Feld befindliche Pflanzenreste, wie z. B. Stroh und Stoppeln, zwischen den Furchenbalken und den unbearbeiteten Teil des entsprechenden Erdstreifens, wie es in Fig. 4 schematisch dargestellt ist. Die beiden so bearbeiteten Erdstreifen (Fig. 4) werden anschliessend von den Werkzeugkreiseln 29 bearbeitet, die, wie in Fig. 1 dargestellt, gegensinnig angetrieben werden. Die abgelegten Furchenbalken werden dabei von den Zinken 31 erfasst, während mit den Scheiben 32 die oberen Schichten der unbearbeiteten Erdstreifen losgeschnitten und gleichzeitig mit Hilfe der unter den Scheiben angeordneten Untergrundauflockerungswerkzeuge 32A eine intensive Erdlockerung durchgeführt wird, wobei die Erde entgegen dem ersten Arbeitsgang in bezug auf die Längssymmetrieebene A-A nach aussen verteilt wird. Auf diese Weise wird die bearbeitete Erde gleichmässig über die gesamte Arbeitsbreite der Maschine verteilt, so dass ein intensiv bearbeiteter Bodenstreifen entsteht, der abschliessend durch die Nachlaufwalze 49 noch leicht verdichtet wird. Der so von der Maschine bearbeitete Bodenstreifen kann dann ohne weitere Bearbeitung eingesät werden.

Da die Pflanzenreste nach dem Pflügen zwischen den Furchenbalken und dem noch nicht bearbeiteten mittleren Bodenstreifen liegen, kann eine intensive Vermischung der Erde mit diesen Pflanzenresten erfolgen. Durch die im Betrieb gerade über dem Boden befindlichen Streichschienen 40 lassen sich Verstopfungen der Nachlaufwalze 49 durch Pflanzenresten vermeiden. Die Verteilung von losem Material, wie z. B. Stroh und Stoppelresten, im Boden erfolgt homogener und intensiver. Diese Wirkung wird durch die nach vorn geneigte Stellung der Maschine noch verstärkt.

Mit den Hebeln 42 und 44 kann die Höhe der Streichschienen 40 an die eingestellte Arbeitstiefe der Pflugkörper 10 und Werkzeugkreisel 29 angepasst werden.

Mit der beschriebenen Maschine wird eine innige und intensive Vermischung der auf dem Feld zurückgebliebenen Pflanzenreste, wie z. B. Stroh und Stoppeln, mit Erde erreicht werden, wonach ggf. sofort eingesät werden kann. Mittels des Hubzylinders 25, der in bekannter Weise an die Schlepperhydraulik angeschlossen ist, kann der Anbaubock 23 mit den Dreipunktanschlüssen quer zur Fahrt- und Arbeitsrichtung A verschoben werden, um die Maschine in bezug auf den Schlepper und den zu bearbeitenden Bodenstreifen vorteilhaft ausrichten zu können.

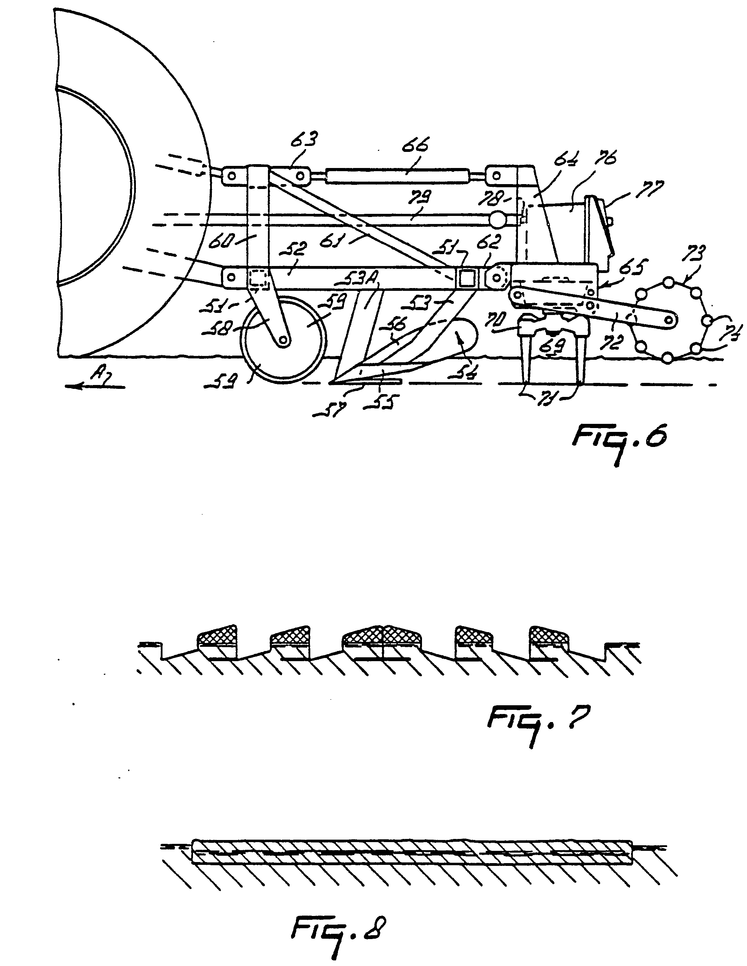

Die Fig. 5 und 6 zeigen ein zweites Ausführungsbeispiel der erfindungsgemässen Bodenbearbeitungsmaschine. In dieser Ausführung hat die Maschine einen horizontal angeordneten, rechteckigen Rahmen, der aus zwei Querbalken 51 und drei Verbindungsbalken 52 besteht. Die Verbindungsbalken 52 liegen in Fahrt- und Arbeitsrichtung A und verbinden die senkrecht dazu angeordneten Querbalken 51 an den Enden und in der Mitte. Der hintere Querbalken 51 ist an seinen Enden und mit gleichem Abstand über seine Länge verteilt mit insgesamt sieben schräg nach unten und vorne gerichteten Trägern 53 versehen, die jeweils aus zwei einen Winkel miteinander aufspannenden geraden Teilstücken bestehen. Der mittlere Träger 53A ist nicht direkt am Querbalken 51 sondern am mittleren Verbindungsbalken 52 befestigt und wird im folgenden noch genauer beschrieben.

Am untere Teil jedes Trägers 53 ist ein Pflugkörper 54 befestigt. Der Pflugkörper 54 hat ein Schar 55, das sich, wie beim ersten Ausführungsbeispiel, vom Träger 53 ab schräg nach oben und hinten erstreckt, so dass das Schar 55 nahe beim Träger 53 die tiefste Wirkung hat. An jedes Schar 55 schliesst sich nach oben ein Streichbrett 56 an. Die Pflugkörper 54 sind in zwei Gruppen zu je drei Pflugkörpern 54 an beiden Seiten der Längssymmetrieebene A-A (Fig. 5) der Maschine symmetrisch dazu angeordnet, wie in Fig. 5 dargestellt ist. Die zwischen den Enden des hinteren Querbalkens 51 angeordneten Träger 53 weisen jeweils an der von dem Schar 55 der jeweiligen Pflugkörper 54 abgewandten Seite ein Schar 57 auf, das etwa horizontal angeordnet und schräg nach hinten gerichtet ist. Die Scharen 55 und 57 sind so angeordnet, dass ihre nach vorne und zur Seite weisenden Flachseiten einen Winkel von etwa 30° zur Arbeitsrichtung A aufweisen, wie in Fig. 5 dargestellt ist. Die Scharen 57 sind kürzer als die Scharen 55 und verjüngen sich nach hinten. Am mittleren Verbindungsbalken 52 ist ein im wesentlichen nach unten gerichteter Träger 53A angebracht, dessen Vorderseite als Schneide ausgebildet ist. Am unteren Ende des Trägers 53A sind zwei symmetrisch zur Längsmittelebene A-A angeordnete Scharen 57 befestigt, deren Vorderseiten parallel an der Vorderseite der Pflugkörper 54 bzw. der Scharen 57 verlaufen (Fig. 5). Der vordere Querbalken 51 ist in Höhe der Träger 53 mit schräg nach unten und hinten gerichteten flachen Trägerpaaren 58 versehen, zwischen deren Enden jeweils ein Scheibensech 59 frei drehbar gelagert ist. Die Unterseiten der Scheibenseche 59 befinden sich in Höhe der Scharspitzen 55, 57 (Fig. 6). Nahe der Mitte ist der vordere Querbalken 51 mit einem Anbaubock 60 versehen. Die Oberseite des Anbaubockes 60 ist über nach hinten divergierende Streben 61 mit dem hinteren Querbalken 51 verbunden. Der Anbaubock 60 ist mit Dreipunktanschlüssen zum Ankuppeln der Maschine an die Dreipunkt-Hebevorrichtung des Schleppers versehen. Die Rückseite des hinteren Querbalkens 51 ist in Höhe der unteren Anschlüsse des Anbaubockes 60 mit sich nach hinten gerichteten Zungen 62 versehen; die Rückseite des Anbaubockes 60 ist nahe der Oberseite mit einem Paar nach hinten gerichteter Zungen 63 versehen. Die Zungen 62 und 63 bilden einen Dreipunkt-Anschluss für einen entsprechenden Anbaubock 64 einer Kreiselegge 65, die rückseitig an der beschriebenen Maschine angeschlossen ist. Hierbei sind die unteren Anschlüsse des Anbaubockes 64 gelenkig mit den Zungen 62 verbunden, der obere Anschluss ist mittels eines längverstellbaren Lenkers 66 mit den an der Rückseite des Anbaubockes 60 vorgesehenen Zungen 63 verbunden. Die Kreiselegge 65 hat einen quer zur Fahrt- und Arbeitsrichtung A angeordneten Kastenbalken 67, in dem in gleichen Abständen von vorzugsweise 25 cm aufwärts gerichtete, vorzugsweise vertikale Wellen 68 von Werkzeugkreiseln 69 gelagert sind. Jeder Werkzeugkreisel 69 besteht aus einem etwa horizontalen Werkzeugträger, der unter dem Kastenbalken 67, am unteren Ende einer Welle 68 sitzt und der nahe den Enden mit nach unten gerichteten Werkzeugen 71 in Form von Zinken versehen ist. An den seitlichen Enden des Kastenbalkens 67 sind nahe der Vorderseite nach hinten gerichtete, verstellbare Arme 72 angelenkt, die nahe der Rückseite des Kastenbalkens 67 in mehreren Stellungen verriegelbar sind.

Zwischen den hinteren Enden der Arme 72 ist eine Nachlaufwalze 73 frei drehbar gelagert. Die Nachlaufwalze 73 erstreckt sich über die ganze Breite der Maschine und ist über ihren Umfang mit Stäben 74 versehen, die in Längsrichtung der Walze, parallel zu ihrer Drehachse angeordnet sind (Fig. 5). Innerhalb des Kastenbalkens 67 sitzt auf jeder Welle 68 ein Stirnrad 75; die Stirnräder 75 benachbarter Wellen 68 stehen miteinander im Eingriff, so dass benachbarte Werkzeugkreisel 69 gegensinnig rotieren. Nahe der Mitte des Kastenbalkens 67 ist die Welle 68 eines Werkzeugkreisels 69 nach oben herausgeführt und reicht bis in ein Getriebe 76 auf der Oberseite des Kastenbalkens 67. Das Getriebe 76 ist in diesem Ausführungsbeispiel als Kegelradwinkelgetriebe ausgebildet; die Antriebswelle des Getriebes 67 ist in ein rückseitig daran angeschlossenes Wechselgetriebe 77, eines Wechselradkastens geführt. Die Hauptantriebswelle 78 des Wechselgetriebes 77 liegt in Fahrtrichtung A und ist durch das Getriebe 76 hindurch und an dessen Vorderseite herausgeführt. Dieses vordere Wellenende wird im Betrieb über eine Kreuzgelenkwelle 79 mit der Zapfwelle des Schleppers antriebsverbunden.

Die Arbeits- uns Wirkungsweise der letztbeschriebenen Maschine entspricht im wesentlichen der Maschine des ersten Ausführungsbeispiels.

Im Betrieb ist die Maschine über ihren Anbaubock 60 mit der Dreipunkt-Hebevorrichtung des Schleppers verbunden und wird von der Zapfwelle des Schleppers angetrieben. Die Werkzeugkreisel 69 rotieren dabei in den in Fig. 5 gekennzeichneten Richtungen und bearbeiten den Boden gleichmässig über die gesamte Arbeitsbreite der Maschine.

Die Arbeitstiefe der Maschine kann über die Dreipunkt-Hebevorrichtung des Schleppers eingestellt werden, ggf. können auch höheneinstellbare Stützvorrichtungen vorgesehen sein.

Die Arbeitstiefe der Kreiselegge 65 kann durch Höhenverstellung der Nachlaufwalze 73 in bezug auf den Kastenbalken 67 angepasst werden. Im Betrieb wird die Maschine vom Schlepper in Arbeits- und Fahrtrichtung A gezogen, dabei wird der Boden zunächst durch die Scheibenseche 59 vertikal getrennt, so dass sechs gleichbreite, in Fahrtrichtung A liegende Bodenstreifen entstehen. Anschliessend werden diese Streifen zur Hälfte an der unterseite durch die Scharen 55 der Pflugkörper 54 losgeschnitten, wobei die zwischen zwei Pflugkörpern liegenden Scharen 57 die anderen Hälften der Bodenstreifen an der Unterseite fast ganz losschneiden. Die von den Scharen 55 der Pflugkörper 54 losgeschnittenen Furchenbalken haben durch die besondere Anordnung der Scharen 55 den in Fig. 7 dargestellten Querschnitt. Hierdurch können die Streichbretter 56 der Pflugkörper 54 die Furchenbalken leicht ausheben und auf der anderen Hälfte des entsprechenden Bodenstreifens umgekehrt ablegen; diese unter den Furchenbalken liegenden Hälften der Bodenstreifen sind nur an der Unterseite durch die Scharen 57 losgeschnitten. Hiernach entsteht über die Arbeitsbreite der Maschine das in Fig. 7 schematisch dargestellte Bodenprofil, das nachfolgend von der Kreiselegge 65 bearbeitet wird. Durch die rotierenden Werkzeugkreisel 69 wird die Erde mit dem pflanzlichen Material (Stoppeln, Stroh), das unter den Furchenbalken liegt, intensiv vermischt und durch die nachfolgende Nachlaufwalze 73 leicht verdichtet, so dass ein einsäbares Saatbett entsteht (Fig. 8).

Wie beim ersten Ausführungsbeispiel wird auch hier ein Furchenbalken mit den an der Oberseite befindlichen pflanzlichen Resten seitlich verschoben und umgekehrt auf einen benachbarten Erdstreifen abgelegt, so dass die pflanzlichen Reste zwischen dem gewendeten Furchenbalken und dem darunter liegenden Erdstreifen gelangen. Die durch die Pflugkörper zur Mitte hin versetzte Erde wird von den nachfolgenden Werkzeugkreiseln 69 wieder nach aussen bewegt, so dass abschliessend ein gleichmässiges Bodenprofil über die ganze Arbeitsbreite der Maschine gebildet ist, wie es in Fig. 8 schematisch dargestellt ist.

Bei der Maschine nach dem ersten Ausführungsbeispiel wird die Unterseite des unbearbeiteten Erdstreifens von der Scheibe 32 eines rotierenden Werkzeugkreisels 29 losgeschnitten, bei der Maschine nach dem zweiten Ausführungsbeispiel erfolgt dies gleichzeitig mit dem Losschneiden der Unterseite des Furchenbalkens.

Mit der erfindungsgemässen Maschine kann ein abgeerntetes Feld, z. B. ein Stoppelfeld, in nur einem Arbeitsgang als Saatbett bereitet werden, wobei eine innige und gleichmässige Durchmischung von Pflanzenresten und Erde erfolgt und das durchmischte Bodenmaterial gleichmässig über die gesamte Arbeitsbreite der Maschine verteilt wird.

**Patentansprüche**

1. Bodenbearbeitungsmaschine mit mindestens zwei Pflugkörpern (10, 54), wobei jedem Pflugkörper (10 bzw. 54) mindestens ein angetriebenes Bodenbearbeitungswerkzeug (29 bzw. 69) zum Bearbeiten des von den Pflugkörpern (10 bzw. 54) seitlich versetzten Furchenbalkens zugeordnet ist, dadurch gekennzeichnet, dass ein Pflugkörper (10 bzw. 54) so ausgebildet und angeordnet ist, dass die Unterseite des Furchenbalkens nahe der Vorderseite tiefer als an der Hinterseite ausgeschnitten wird und das Bodenbearbeitungswerkzeug (29 bzw. 69) den Furchenbalken in entgegengesetzter Richtung seitlich versetzt.

2. Bodenbearbeitungsmaschine nach Anspruch 1, dadurch gekennzeichnet, dass ein Pflugkörper (10 bzw. 54) ein Streichbrett (12 bzw. 56) und ein Schar (11 bzw. 55) aufweist und die hinteren Enden der Schare (11 bzw. 55) höher angeordnet sind als die vorderen Spitzen dieser Schare.

3. Bodenbearbeitungsmaschine nach Anspruch 1 oder 2, dadurch gekennzeichnet, dass mehrere angetriebene Bodenbearbeitungswerkzeuge (29 bzw. 69) drehbar um aufwärts gerichtete Achsen in einer Reihe quer zur Arbeitsrichtung (A) der Maschine angeordnet sind.

4. Bodenbearbeitungsmaschine nach einem der Ansprüche 1 bis 3, dadurch gekennzeichnet, dass ein angetriebenes Bodenbearbeitungswerkzeug (29) um eine leicht nach vorne geneigte Achse drehbar ist und einen zylindrischen Teil (30) aufweist, der mit Zinken (31) versehen ist.

5. Bodenbearbeitungsmaschine nach Anspruch 4, dadurch gekennzeichnet, dass die Zinken (31) in Reihen angebracht sind, die in etwa gleichem Winkelabstand über den Umfang des zylindrischen Teils (30) angeordnet sind und die sich in der Längsrichtung des zylindrischen Teils (30) erstrecken.

6. Bodenbearbeitungsmaschine nach Anspruch 4 oder 5, dadurch gekennzeichnet, dass nahe der Unterseite des zylindrischen Teils (30) eine Scheibe (32) angebracht ist und sich unter der Scheibe (32) Auflockerungswerkzeuge (32A) zur Auflockerung des Untergrundes befinden.

7. Bodenbearbeitungsmaschine nach einem der Ansprüche 1 bis 6, dadurch gekennzeichnet, dass ein drehbares Bodenbearbeitungswerkzeug (29 bzw. 69) mit verschiedenen Drehzahlen antreibbar ist.

8. Bodenbearbeitungsmaschine nach einem der Ansprüche 1 bis 7, dadurch gekennzeichnet, dass zwei benachbarte Pflugkörper (10 bzw. 54) symmetrisch in bezug auf eine Symmetrieebene (A-A) angeordnet sind, die sich in Arbeitsrichtung (A) zwischen zwei benachbarten, rotierenden Bodenbearbeitungswerkzeugen (29 bzw. 69) erstreckt.

9. Bodenbearbeitungsmaschine nach Anspruch 8, dadurch gekennzeichnet, dass Gruppen benachbarter Pflugkörper (54) symmetrisch in bezug auf eine sich in der Arbeitsrichtung (A) erstreckende Symmetrieebene (A-A) angeordnet sind.

10. Bodenbearbeitungsmaschine nach Anspruch 9, dadurch gekennzeichnet, dass ein Pflugkörper (54) an der zum benachbarten Pflugkörper liegenden Seite mit einer etwa horizontal angeordneten Schar (57) versehen ist und vor jedem Pflugkörper (54) ein scheibenförmiges, um eine etwa horizontale Querachse drehbares Sech (59) angebracht ist.

11. Bodenbearbeitungsmaschine nach einem der Ansprüche 1 bis 10, dadurch gekennzeichnet, dass hinter den rotierenden Bodenbearbeitungswerkzeugen (29 bzw. 69) eine sich über die ganze Breite der Maschine erstreckende, höheneinstellbare Walze (49 bzw. 73) vorgesehen ist.

12. Bodenbearbeitungsmaschine nach einem der Ansprüche 8 bis 11, dadurch gekennzeichnet, dass nahe bei der Mitte zwischen zwei Pflugkörpern (10) ein drehbarer Tragkörper (15) angebracht ist, der eine etwa vertikale Scheibe (16) aufweist.

13. Bodenbearbeitungsmaschine nach einem der Ansprüche 1 bis 12, dadurch gekennzeichnet, dass für ein rotierendes Bodenbearbeitungswerkzeug (29) eine Streichschiene (40) vorgesehen ist, die mindestens zum Teil konzentrisch in bezug auf die Drehachse eines Bodenbearbeitungswerkzeuges (29) angeordnet ist und das Bodenbearbeitungswerkzeug rückseitig umgibt.

14. Bodenbearbeitungsmaschine nach Anspruch 13, dadurch gekennzeichnet, dass die Streichschiene (40) profiliert aufgebildet ist.

15. Bodenbearbeitungsmaschine nach einem der Ansprüche 1 bis 14, dadurch gekennzeichnet, dass die Pflugkörper (54) in einem Gestell (51, 53) angebracht sind, das an der Rückseite mit Anschlüssen versehen ist zum Ankuppeln einer Bodenbearbeitungsmaschine, die um aufwärts gerichtete Achsen rotierenden Bodenbearbeitungswerkzeugen (69) aufweist.

16. Bodenbearbeitungsmaschine nach einem der Ansprüche 1 bis 15, dadurch gekennzeichnet, dass eine Dreipunktbefestigung (23) vorgesehen ist, die in bezug auf das Gestell quer zur Arbeitsrichtung (A) der Maschine verschiebbar ist.

17. Bodenbearbeitungsmaschine nach Anspruch 16, dadurch gekennzeichnet, dass zum Verschieben der Dreipunktbefestigung ein hydraulischer Verstellzylinder (25) vorgesehen ist, der in einem Gestellbalken (1) angebracht ist.

**Claims**

1. Soil tilling implement having at least two plough bases (10, 54), in which there is associated with each plough base (10 or 54) at least one driven soil tilling tool (29 or 69) for tilling the furrow slice laterally displaced by the plough bases (10 or 54), characterised in that a plough base (10 or 54) is constructed and arranged such that the underside of the furrow slice close to the front side is cut out more deeply than on the rear side and the soil tilling tool (29 or 69) laterally displaces the furrow slice in the opposite direction.

2. Soil tilling implement according to claim 1, characterised in that a plough base (10 or 54) has a mouldboard (12 or 56) and a ploughshare (11 or 55) and the rear ends of the ploughshares (11 or 55) are arranged at a higher level than the front tips of these ploughshares.

3. Soil tilling implement according to claim 1 or 2, characterised in that several driven soil tilling tools (29 or 69) are arranged such that they are rotatable about shafts, which are directed upwards, in a row crosswise to the working direction (A) of the implement.

4. Soil tilling implement according to one of the claims 1 to 3, characterised in that a driven soil tilling tool (29) is rotatable about a shaft which is inclined slightly forwards and has a cylindrical part (30) which is provided with prongs (31).

5. Soil tilling implement according to claim 4, characterised in that the prongs (31) are mounted in rows which are arranged with substantially equal angular spacing over the periphery of the cylindrical part (30) and which extend in the longitudinal direction of the cylindrical part (30).

6. Soil tilling implement according to claim 4 or 5, characterised in that a disk (32) is mounted close to the underside of the cylindrical part (30) and loosening tools (32A) are located underneath the disk (32) for the purpose of loosening the subsoil.

7. Soil tilling implement according to one of the claims 1 to 6, characterised in that a rotatable soil tilling tool (29 or 69) can be driven at different rotational speeds.

8. Soil tilling implement according to one of the claims 1 to 7, characterised in that two adjacent plough bases (10 or 54) are arranged symmetrically in relation to a plane of symmetry (A-A) which extends in the working direction (A) between two adjacent rotating soil tilling tools (29 or 69).

9. Soil tilling implement according to claim 8, characterised in that groups of adjacent plough bases (54) are arranged symmetrically in relation to a plane of symmetry (A-A) extending in the working direction (A).

10. Soil tilling implement according to claim 9, characterised in that a plough base (54) is provided, on the side lying towards the adjacent plough base, with a ploughshare (57), which is arranged in a substantially horizontal manner, and a disk-shaped coulter (59), which is rotatable about a substantially horizontal transverse axis, is mounted in front of each plough base (54).

11. Soil tilling implement according to one of the claims 1 to 10, characterised in that a vertically adjustable roller (49 or 73), which extends over the whole width of the implement, is provided behind the rotating soil tilling tools (29 or 69).

12. Soil tilling implement according to one of the claims 8 to 11, characterised in that a rotatable support body (15), which has a substantially vertical disk (16), is mounted close to the centre between two plough bases (10).

13. Soil tilling implement according to one of the claims 1 to 12, characterised in that provided for a rotating soil tilling tool (29) there is a mouldboard extension (40) which is arranged at least in part concentrically in relation to the axis of rotation of a soil tilling tool (29) and surrounds the soil tilling tool on the rear side.

14. Soil tilling implement according to claim 13, characterised in that the mouldboard extension (40) is formed in a profiled manner.

15. Soil tilling implement according to one of the claims 1 to 14, characterised in that the plough bases (54) are mounted in a frame (51, 53) which on the rear side is provided with connections for coupling a soil tilling implement which has soil tilling tools (69) which rotate about shafts which are directed upwards.

16. Soil tilling implement according to one of the claims 1 to 15, characterised in that there is provided a three-point securement (23) which can be displaced in relation to the frame crosswise to the working direction (A) of the implement.

17. Soil tilling implement according to claim 16, characterised in that a hydraulic adjusting cylinder (25), which is mounted in a frame beam (1), is provided for displacing the three-point securement.

**Revendications**

1. Machine pour travailler le sol avec au moins deux corps de charrue (10, 54) dans laquelle est associé à chaque corps de charrue au moins un outil de travail du sol (29 ou 69) motorisé pour travailler la bande de terre rejetée latéralement par les corps de charrue (10, 54), caractérisée en ce qu'un corps de charrue (10 ou 54) est conformé et agencé de telle sorte que la face inférieure de la bande de terre est découpée au voisinage de la partie antérieure plus profondément qu'à la partie postérieure et en ce que l'outil de travail du sol (29 ou 69) décale latéralement la bande de terre en sens opposé.

2. Machine pour travailler le sol selon la revendication 1, caractérisée en ce qu'un corps de charrue (10 ou 54) présente un versoir (12 ou 56) et un soc (11 ou 55) et que les extrémités postérieures des socs (11 ou 55) sont disposées plus haut que les pointes antérieures de ces socs.

3. Machine pour travailler le sol selon la revendication 1 ou 2, caractérisée en ce que plusieurs outils motorisés pour le travail du sol (29 ou 69) sont disposés de manière à tourner autour d'axes dirigés vers le haut, en une rangée perpendiculaire au sens de marche (A) de la machine.

4. Machine pour travailler le sol selon une des revendications 1 à 3, caractérisée en ce qu'un outil motorisé pour le travail du sol (29) tourne autour d'un axe légèrement incliné vers l'avant et présente une partie cylindrique (30) munie de dents (31).

5. Machine pour travailler le sol selon la revendication 4, caractérisée en ce que les dents (31) sont placées en rangées disposées avec un écart angulaire sensiblement uniforme sur le pourtour de la partie cylindrique (30), ces rangées s'étendant dans le sens longitudinal de la partie cylindrique (30).

6. Machine pour travailler le sol selon la revendication 4 ou 5, caractérisée en ce qu'un disque (32) est disposé au voisinage de la face inférieure de la partie cylindrique (30) et en ce que des outils ameublisseurs (32A) se trouvent sous le disque (32) pour ameublir le sous-sol.

7. Machine pour travailler le sol selon une des revendications 1 à 6, caractérisée en ce qu'un outil rotatif de travail du sol (29 ou 69) est entraîné à des vitesses de rotation diverses.

8. Machine pour travailler le sol selon une des revendications 1 à 7, caractérisée en ce que deux corps de charrue (10 ou 54) voisins l'un de l'autre sont disposés symétriquement par rapport à un plan de symétrie (A-A) s'étendant dans le sens de marche (A) entre deux outils rotatifs de travail du sol (29 ou 69).

9. Machine pour travailler le sol selon la revendication 8, caractérisée en ce que des groupes de corps de charrue (54) voisins entre eux sont disposés symétriquement par rapport à un plan de symétrie (A-A) s'étendant dans le sens de marche (A).

10. Machine pour travailler le sol selon la revendication 9, caractérisée en ce qu'un corps de charrue (54) est muni, sur son côté proche du corps de charrue voisin, d'un soc (57) disposé à peu près horizontalement et en ce qu'en avant de chaque corps de charrue (54) est monté un coutre (59) pouvant tourner autour d'un axe transversal à peu près horizontal.

11. Machine pour travailler le sol selon une des revendications 1 à 10, caractérisée en ce qu'il est prévu en arrière des outils rotatifs de travail du sol (29 ou 69) un rouleau (49 ou 73) réglable en hauteur s'étendant sur toute la largeur de la machine.

12. Machine pour travailler le sol selon une des revendications 8 à 11, caractérisée en ce qu'au voisinage du milieu entre deux corps de charrue (10) est disposé un support pivotant (15) portant un disque (16) sensiblement vertical.

13. Machine pour travailler le sol selon une des revendications 1 à 12, caractérisée en ce qu'il est prévu pour un outil rotatif de travail du sol (29) une barre étaleuse (40) qui est disposée, au moins en partie, concentriquement à l'axe de rotation d'un outil de travail du sol (29) et entoure l'outil de travail du sol sur son côté postérieur.

14. Machine pour travailler le sol selon la revendication 13, caractérisée en ce que la barre étaleuse (40) est profilée.

15. Machine pour travailler le sol selon une des revendications 1 à 14, caractérisée en ce que les corps de charrue (54) sont montés dans un châssis (51, 53) muni sur son côté postérieur d'organes d'attelage pour atteler une machine de travail du sol présentant des outils rotatifs (69) de travail du sol, ces outils tournant autour d'axes dirigés vers le haut.

16. Machine pour travailler le sol selon une des revendications 1 à 15, caractérisée en ce qu'il est prévu un dispositif de fixation en trois points (23) pouvant coulisser par rapport au châssis, transversalement au sens de marche (A) de la machine.

17. Machine pour travailler le sol selon la revendication 16, caractérisée en ce qu'il est prévu, pour le coulissement du dispositif de fixation en trois points, un vérin hydraulique de réglage (25) monté sur une des poutres (1) du châssis.

Fig. 1

EP 0 174 692 B1

FIG.2

FIG.3

FIG.4

2

FIG.5

FIG.6

FIG. 7

FIG.8

4